# EUROPEAN PATENT APPLICATION

(11) **EP 4 746 026 A1**
(43) Date of publication of application: **20.05.2026**
(21) Application number: 24212738.9
(22) Date of filing: 13.11.2024
(51) Int. Cl.: H01J 41/12, H01J 41/20

(54) **ION PUMP EQUIPPED WITH A MONITORING SYSTEM AND METHOD OF OPERATING AN ION PUMP USING SAID MONITORING SYSTEM**

(71) Applicant: Agilent Technologies, Inc., Santa Clara, CA 95051 (US)
(72) Inventor: BONMASSAR, Luca, Santa Clara, 95051 (US); DROVANDI, Sara, Santa Clara, 95051 (US); ISOARDI, Tiziano, Santa Clara, 95051 (US); MANASSERO, Paolo, Santa Clara, 95051 (US)
(74) Representative: Robba, Pierpaolo

(57) **Abstract**

The present invention relates to an ion pump (1) equipped with a monitoring system that, by monitoring the temperature present inside the ion pump (1), makes it possible to determine whether the ion pump (1) is in the OFF state or the ON state. In particular, thanks to said monitoring system it is possible to assess the ON state or OFF state of the ion pump (1) even when said pump is operating under low-pressure conditions, with an electric current below the minimum value detectable by conventional reading scales. The present invention further relates to a method of operating an ion pump (1) using said monitoring system to assess the ON/OFF state of said ion pump (1).

## Description

### Technical Field of the Invention

The present invention relates to an ion pump used for creating a vacuum.

More particularly, the present invention relates to an ion pump equipped with a monitoring system allowing determining whether the ion pump is in operation.

By way of non-limiting example, said ion pump can be a low-pressure ion pump.

The present invention further relates to a method of operating an ion pump employing said monitoring system.

### Prior Art

An ion pump is a device able to create and maintain high-vacuum conditions within an environment.

The ion pump operation is based on one or more Penning cells, which, as described in more detail below, use a combination of electric and magnetic fields to confine electrons and start ionization and getter pumping processes.

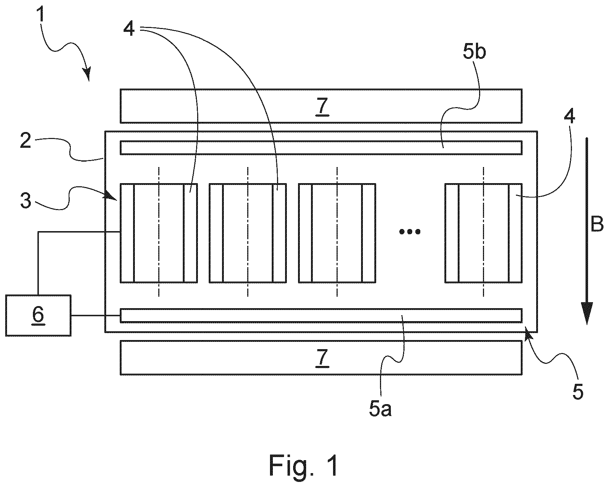

A conventional ion pump 1, shown in Figure 1, comprises a vacuum casing 2 which accommodates:
- at least one anode 3, consisting of a plurality of hollow cylindrical pumping cells 4; and
- at least one cathode 5, consisting of plates 5a, 5b, for example made of titanium, located at the opposite ends of the cells 4.

The ion pump 1 further comprises means 6, suitable for applying to the anode 3 a potential higher than the potential at the cathode, and magnets 7 placed outside the casing 2, at the opposite ends of the cells 4, and capable of producing a magnetic field oriented parallel to the axes of said cells 4 (as indicated by arrow B in Figure 1).

Anode 3, cathode 5 and magnets 7 define said one or more Penning cells.

During operation, when a potential difference (typically from 3 to 9 kV) between the anode 3 and the cathode 5 is applied, an intense electric field is generated between the cells 4 of anode 3 and the cathode 5, this resulting in the emission of electrons from the cathode 5. Said electric field, combined with the magnetic field generated by the magnets 7, makes it possible to trap, within the cells 4, the electrons emitted by the cathode 5, thereby creating an electron plasma that is used to ionize the gas molecules present within the environment to be evacuated.

In particular, when the gas molecules enter the cells 4, the plasma electrons collide with these molecules, thereby ionising them. Because of the electric field, the positive ions resulting from said ionisation are attracted towards the cathode 5, leaving the corresponding electrons, left within the cells 4, available for further ionization of the other gas molecules. In this respect, the presence of the magnets 7 for generating the magnetic field allows imparting helical trajectories to electrons, thereby increasing the length of the paths of such electrons between cathode and anode and, therefore, the possibility of collision and corresponding ionization of the gas molecules present within the cells 4.

Positive ions, meanwhile, reach the cathode 5 and collide with the surface of said cathode. The collision of positive ions with the titanium plates of the cathode 5 causes the phenomenon of sputtering, i.e., the emission of titanium atoms from the cathode 5. Said atoms, by covering the inner surfaces of the ion pump 1,create an active titanium film which chemically traps the gas molecules. This mechanism is named pumping at the anode or getter pumping..

As is known, ion pump are commonly used in ultra-high vacuum (UHV) systems, because they can reach pressures lower than 10⁻¹¹ mbar.

Unlike other UHV pumps or conventional mechanical pumps, ion pumps do not have any moving parts and do not require oil or other lubricants. For this reason, ion pumps do not risk contaminating the environments in which they operate, require little maintenance and do not generate vibrations, whereby they constitute an ideal solution for all those applications and production processes that require a clean environment and high-precision control, in both research and industry.

Furthermore, ion pumps are closed pumps, they do not have any foreline. In fact, an ion pump keeps inside all the pumped gas. Therefore, whatever is pumped by an ion pump, will remain in it. This avoids the risk of venting the system to which the ion pump is connected. In addition, ion pump does not require a backing pump during operation, but only at start-up since the ion pump cannot be started at atmospheric pressure.

However, ion pumps are not free from drawbacks.

In fact, it should be considered that, to increase the performance of an ion pump at different operating pressures, it is preferable to supply such pump with different electric potentials, which leads to correspondingly have a different electric current between anode and cathode and, in some cases, a very low electric current between anode and cathode.

On the one hand, the low current level can lead to accidental switching-off of the ion pump, and on the other hand, it is difficult to read, as this current level may be below the reading scale on the device that powers the ion pump.

As the current level is below the minimum reading value, it can be difficult to tell whether the pump is operating at low pressure or has switched off accidentally.

The main object of the present invention is therefore to provide an ion pump equipped with a monitoring system that makes it possible to determine accurately whether the ion pump is running or switched off.

In particular, the object of the present invention is to provide a monitoring system that can determine the ON/OFF state of the ion pump even when said pump is operating under low-pressure conditions.

A further object of the present invention is to provide an ion pump equipped with a monitoring system that makes it possible to overcome the drawbacks described above without this leading to a considerable increase in the cost of the pump itself.

Finally, an object of the present invention is to provide a method of operating an ion pump using said monitoring system to determine the ON/OFF state of the ion pump.

These and other objects are achieved by the ion pump equipped with a monitoring system as well as by the method of operating said ion pump as claimed in the appended claims.

### Summary of the Invention

The ion pump according to the invention comprises, in a known manner, at least one anode and at least one cathode and is capable of switching from an OFF state, in which said pump is not running, to an ON state, in which between said at least one anode and said at least one cathode there is applied an electric potential difference, which, in combination with the magnetic field in which the pump is immersed, generates an electron plasma.

In the ON state, the presence of said electron plasma causes an increase in temperature inside the ion pump. In other words, the temperature inside the ion pump in the ON state is higher than the temperature inside the ion pump in the OFF state.

Accordingly, the ion pump according to the invention comprises a monitoring system suitable for detecting the temperature inside the ion pump.

In fact, by measuring the temperature change inside the ion pump (hereinafter referred to as 'internal temperature') it is possible to determine accurately whether said pump is in the ON state or in the OFF state.

Advantageously, the monitoring system according to the invention allows the ON or OFF state of the pump to be determined even in conditions of extremely low electric current, lower than the detectability threshold of the commonly used state-of-the-art reading scales, thereby making said monitoring system particularly suitable also for ion pumps operating at low pressure (and thus at low current).

Preferably, said monitoring system measures a temperature difference between the internal temperature and the temperature measured at a point outside the ion pump, hereinafter referred to as 'external temperature'.

Even more preferably, said monitoring system comprises at least one temperature sensor, located inside the ion pump and arranged to detect the internal temperature of the ion pump or the temperature difference between said internal temperature and said external temperature.

When the ion pump is in the OFF state, the internal temperature of the ion pump tends to approximate the external temperature and therefore said temperature difference is substantially null.

When, instead, the ion pump is in the ON state, the internal temperature increases, the external temperature remains more or less constant and therefore said temperature difference increases.

Said at least one temperature sensor can be, for example, a thermocouple.

However, it will be clear to the person skilled in the art that any temperature sensor suitable for measuring the temperature inside the pump can be used, e.g., a Pt100 probe.

It should be noted that ion pumps comprising systems suitable for monitoring the trend of the internal temperature are already known from the state of the art.

For example, document CN210575823U describes an ion pump equipped with a temperature sensor that detects the temperature present inside the ion pump and transmits the measured values to a control device in real time.

However, in said document, the purpose of monitoring the temperature is to limit changes in the internal temperature: when the internal temperature detected by the sensor exceeds a certain threshold level, the control device activates a cooling system to bring said temperature back to an ideal operating range.

The increase in temperature, indeed, being caused by the electron plasma, indicates that a percentage of the energy supplied to the pump in the form of electric power supply gets wasted for heat production.

Therefore, the temperature changes occurring inside an ion pump are known to be considered as a negative effect one has always tried to mitigate so as not to jeopardize the operating efficiency of the pump.

In this connection, document US2022328294A1 describes a method of feeding the ion pump that makes it possible, during switching-on of the pump, to limit the formation of intense electron plasmas so as to reduce the amount of energy wasted in the form of heat upon starting of the pump itself.

Conversely, in the present invention, the change in temperature is considered not as a phenomenon to be prevented or at least reduced, but rather as a phenomenon to be exploited for accurately determining the ON or OFF state of the ion pump.

In case of application to a low-pressure ion pump, the monitoring system according to the invention is particularly effective because the electron plasma generated by pumps of this type does not lead to a temperature increase that would impair the performance thereof. According to another aspect of the present invention, a method of operating an ion pump is provided which, by means of the monitoring system described above, makes it possible to determine whether the ion pump is in the ON state or in the OFF state.

Said method of operating an ion pump comprises the steps of:
- providing a monitoring system as described above;
- in the absence of an electric potential difference between said at least one anode and said at least one cathode, measuring, by means of said monitoring system, a first internal temperature of the ion pump and/or a first temperature difference between said first internal temperature and the temperature outside the ion pump; at this step, an internal temperature is expected to be substantially constant and equal to said external temperature (also substantially constant) with a resulting temperature difference that is substantially null;
- in the presence of an electric potential difference between said at least one anode and said at least one cathode, measuring, by means of said monitoring system, a second internal temperature of the ion pump and/or a second temperature difference between said second internal temperature and the temperature outside the ion pump;
- based on said measurements of temperature and/or temperature difference, assessing the ON or OFF state of the ion pump according to the following criterion:
   - if said second internal temperature is equal to said first internal temperature or if said first temperature difference is equal to said second temperature difference, the ion pump is in the OFF state;
   - if said second internal temperature is higher than said first internal temperature or if said second temperature difference is higher than said first temperature difference, the ion pump is in the ON state.

According to a further aspect of the present invention, said ion pump can comprise a restart system.

In the event that the ion pump is to be brought from the OFF state to the ON state, e.g., following an accidental switching-off of the pump detected by the monitoring system described above, said restart system generates an electric discharge within the ion pump, thereby increasing the probability of restart of the pump itself, i.e., increasing the probability of restoring the ON state.

Said restart system comprises at least one electron emitter, arranged inside the ion pump and capable of generating an electric discharge to cause switching-on of the ion pump. Preferably, said at least one electron emitter is located near said at least one cathode so as to maximize the probability of generating the electric discharge, while simultaneously reducing the time required to achieve said switching-on.

In this case, too, the restart system is particularly advantageous when applied in a low-pressure ion pump.

Indeed, in low-pressure ion pumps the likelihood of generation of an electric discharge capable of causing switching-on of the pump is very low and numerous attempts are often necessary before a restart is obtained, this resulting in a lengthening of non-productive time. According to this further aspect of the present invention, a method of operating an ion pump is also provided comprising the steps of:
- providing a restart system as described above;
- monitoring the ON/OFF state of the ion pump;
- if it is detected that the ion pump is in the OFF state, activating said restart system to generate an electric discharge within said ion pump.

### Brief Description of Drawings

Further features and advantages of the present invention will become more evident from the following detailed description of a preferred embodiment of the invention, which is given by way of non-limiting example with reference to the annexed drawings, in which:
- Figure 1 shows an ion pump of known type;
- Figure 2a shows a sectional view of a portion of the ion pump according to the invention;
- Figure 2b shows a sectional view of a portion of the ion pump according to a variant of the invention;
- Figure 3 shows a diagram of the trend of the electric current present in the ion pump of Figures 2a and 2b and the pressure present in said pump;
- Figure 4 shows a diagram of the trend of the internal temperature of the ion pump of Figures 2a and 2b as a function of time.

### Detailed Description of a Preferred Embodiment of the Invention

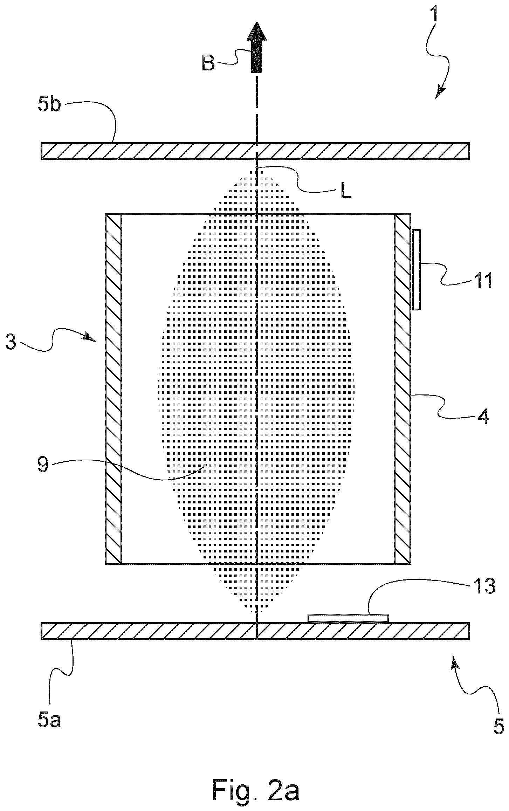

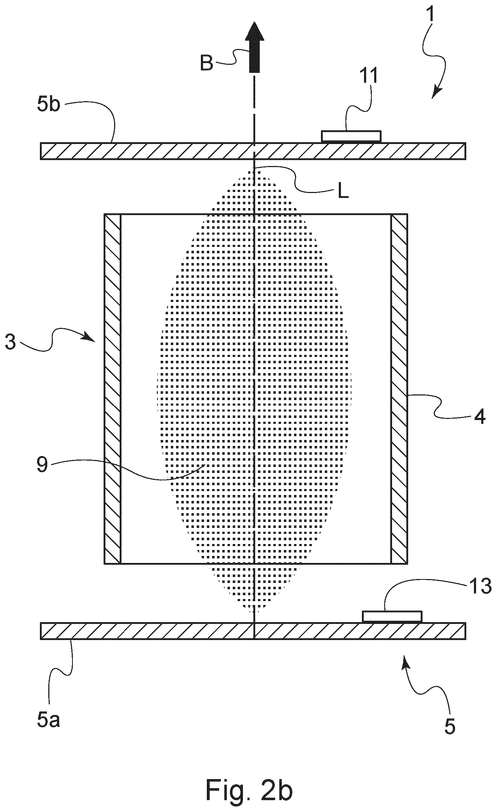

Figures 2a and 2b show a representation of a portion of an ion pump according to the invention.

The general structure of the pump according to the invention is substantially identical to the one of the conventional ion pump shown in Figure 1, and for this reason the same reference numerals as those used in Figure 1 will be used to indicate identical or equivalent components.

Similarly to convention ion pumps, the ion pump 1 according to the invention comprises:
- at least one anode 3, consisting of a plurality of hollow cylindrical pumping cells 4 (for the sake of simplicity, the longitudinal section of only one cell 4 has been shown in Figures 2a and 2b); and
- at least one cathode 5, consisting of two plates 5a, 5b.

Said two plates 5a, 5b are located at the opposite ends of the cells 4 and are substantially perpendicular to the longitudinal axis L of said cells 4.

The cells 4 and the plates of the cathode 5 are immersed in a magnetic field, the direction of which, represented by arrow B in Figures 2a and 2b, is substantially parallel to the longitudinal axis L.

When the ion pump 1 is in the OFF state, the internal temperature, i.e., the temperature present inside the ion pump 1, is at its minimum value and is substantially equal to the external temperature, i.e., the temperature measured at a point (referred to as 'cold point') outside the ion pump 1.

When the ion pump 1 is in the ON state, between the at least one anode 3 and the at least one cathode 5 there is applied an electric potential difference, which results in the generation of an electric current within the ion pump.

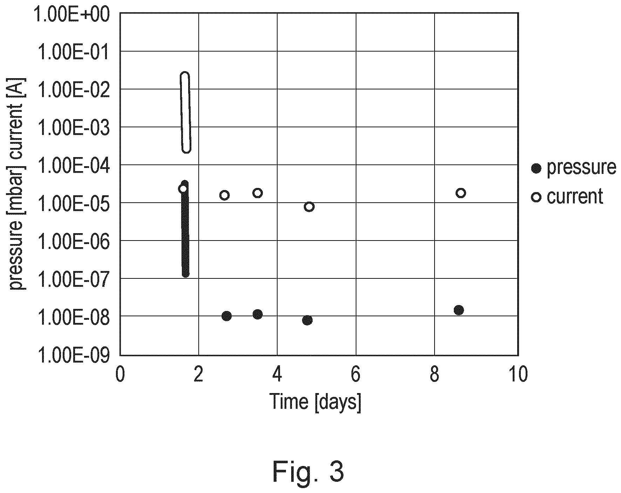

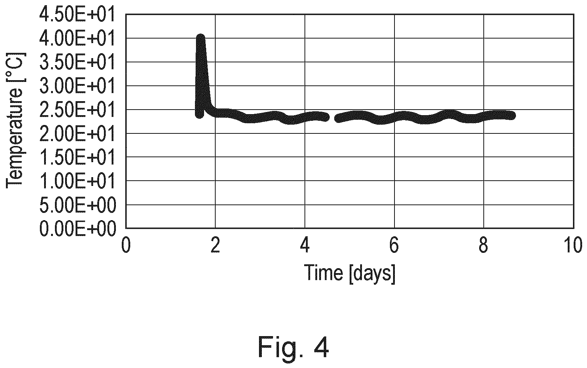

As can be seen from the chart shown in Figure 3, said electric current, after increasing almost instantaneously upon starting the ion pump 1, approaches an almost constant level. The potential difference between anode 3 and cathode 5, in combination with the presence of the magnetic field, allows creating an electron plasma 9, imaginarily illustrated in Figures 2a and 2b, which in turn causes, when the ion pump 1 is brought to the ON state, a sudden change in the pressure inside the pump (Figure 3) and a quick increase in the internal temperature (Figure 4).

Therefore, in the presence of the electron plasma 9, the internal temperature in the ON state is higher than the internal temperature in the OFF state.

Due to the fact that the external temperature remains almost constant when switching from the OFF state to the ON state and vice versa, the internal temperature in the ON state is also higher than said external temperature.

Furthermore, when comparing the graphs shown in Figure 3 and Figure 4, it can be seen that - after the ion pump 1 has been brought to the ON state - under normal operating conditions the internal temperature follows a trend proportional to that of current and pressure.

Therefore, the internal temperature of the ion pump 1, like current and pressure, is an index of the operational state - in particular of the ON or OFF state - of said ion pump.

In this regard, in order to determine whether the ion pump 1 is in the ON or OFF state, said ion pump 1 comprises, according to the invention, a monitoring system suitable for monitoring said internal temperature.

Thanks to this monitoring system it is possible to determine whether the ion pump is running and evacuating the gas molecules or has switched off accidentally, an event that may occur quite frequently, especially with low-pressure ion pumps involving a very low electric current.

In particular, said monitoring system comprises a temperature sensor 11 located within the ion pump and suitable for measuring the temperature difference between said internal temperature and said external temperature.

Said temperature sensor 11 may be arranged, for instance, on one of the cells 4 of the anode 3 (see Figure 2a) or on one of the plates 5b of the cathode 5 (see Figure 2b).

When the ion pump is in the OFF state, said internal temperature is close to said external temperature and therefore the temperature difference is close to the null value; when the ion pump is in the ON state, said internal temperature is higher than said external temperature and therefore the temperature difference in the ON state is higher than the temperature difference measured in the OFF state.

Alternatively, said temperature sensor could measure only the change in internal temperature that occurs upon switching from the OFF state to the ON state, and vice versa, without considering the external temperature.

To determine the values of the internal temperature shown in Figure 4, a thermocouple was used as a temperature sensor; however, any other type of sensor suitable for measuring said internal temperature could be used, e.g., a Pt100 probe.

Furthermore, said monitoring system might comprise two or more temperature sensors, for example located within different cells of the anode or in the gaps between said cells or on one of the cathode plates at different cells of the anode.

According to another aspect of the present invention, a method of operating an ion pump is provided which, by means of the monitoring system described above, makes it possible to determine whether the ion pump 1 is in the ON state or in the OFF state.

Said monitoring method comprises the steps of:
- providing a monitoring system as described above;
- in the absence of an electric potential difference between said at least one anode 3 and said at least one cathode 5, measuring, by means of said monitoring system, a first internal temperature of the ion pump 1 and/or a first temperature difference between said first internal temperature and the temperature outside the ion pump 1;
- in the presence of an electric potential difference between said at least one anode 3 and said at least one cathode 5, measuring, by means of said monitoring system, a second internal temperature of the ion pump 1 and/or a second temperature difference between said second internal temperature and the temperature outside the ion pump 1;
- based on said measurements of temperature and/or temperature difference, assessing the ON or OFF state of the ion pump according to the following criterion:
   - if said second internal temperature is equal to said first internal temperature or if said first temperature difference is equal to said second temperature difference, the ion pump 1 is in the OFF state;
   - if said second internal temperature is higher than said first internal temperature or if said second temperature difference is higher than said first temperature difference, the ion pump 1 is in the ON state.

According to an embodiment of the invention, a restart system can also be provided within the ion pump 1.

In the event that the ion pump is in the OFF state and is to be brought back to the ON state, it is possible to resort to said restart system, which generates an electric discharge in order to increase the probability of restoring the ON state.

Said restart system comprises at least one electron emitter 13, arranged inside the ion pump 1, preferably at one of the plates 5a of said at least one cathode 5 of the ion pump 1, to further increase the probabilities of generation of the electric discharge.

According to this embodiment of the invention, the method of operating the ion pump further comprises the steps of:
- providing a restart system as described above;
- if it is detected that the ion pump 1 is in the OFF state, activating said restart system to generate an electric discharge within said ion pump 1.

It should be noted that it is also possible to provide that the restart system reacts independently of the monitoring system described above and is activated in the event that the OFF state of the ion pump 1 is detected in another manner and with other means.

It will be evident to the person skilled in the art that the embodiment described above in detail should in no way be understood in a limiting sense, and that that numerous modifications and variants are possible without thereby departing from the scope of protection as defined by the appended claims.

## Claims

1. Ion pump (1) comprising at least one anode (3) and at least one cathode (5) and capable of switching from an OFF state to an ON state, in which between said at least one anode (3) and said at least one cathode (5) there is applied an electric potential difference, **characterized in that** it comprises a monitoring system that measures the temperature present inside said ion pump (1) and/or the temperature difference between the temperature present inside said ion pump (1) and the temperature outside said ion pump, and, based on said measurement of temperature and/or temperature difference, determines whether the pump is in the ON state or the OFF state.

2. Ion pump (1) according to claim 1, wherein said monitoring system measures the temperature present inside said ion pump (1) and, based on said temperature measurement, determines whether the pump is in the ON state or the OFF state.

3. Ion pump (1) according to claim 1, wherein said monitoring system measures the temperature difference between the temperature present inside said ion pump (1) and the temperature outside said ion pump and, based on said measurement of temperature difference, determines whether the pump is in the ON state or the OFF state.

4. Ion pump (1) according to claim 1 or 2 or 3, wherein said monitoring system comprises at least one temperature sensor (11) located inside said ion pump (1) and arranged to monitor said temperature present inside said ion pump.

5. Ion pump (1) according to claim 4, wherein said at least one anode (3) consists of a plurality of cells (4), and wherein said at least one temperature sensor (11) is arranged at one of said cells (4).

6. Ion pump (1) according to claim 4, wherein said at least one cathode (5) comprises a pair of plates (5a, 5b) arranged at opposite sides of said at least one anode (3), and wherein said at least one temperature sensor (11) is arranged at one of said plates (5b).

7. Ion pump (1) according to claim 4 or 5 or 6, wherein said at least one temperature sensor is a thermocouple or a Pt100 probe.

8. Ion pump (1) according to any of claims 1-7, comprising a restart system arranged to generate an electric discharge within said ion pump (1) when said ion pump (1) is in the OFF state.

9. Ion pump (1) according to claim 8, wherein said restart system comprises at least one electron emitter (13), arranged inside the ion pump (1) and capable of generating said electric discharge.

10. Ion pump (1) according to claim 9, wherein said at least one cathode (5) comprises a pair of plates (5a, 5b) arranged at opposite sides of said at least one anode (3), and wherein said at least one electron emitter (13) isarranged at one of said plates (5a) of said at least one cathode (5) of said ion pump (1).

11. Method of operating an ion pump (1) comprising at least one anode (3) and at least one cathode (5) and capable of switching from an OFF state to an ON state, in which between said at least one anode (3) and said at least one cathode (5) there is applied an electric potential difference, the method comprising:
- monitoring a temperature present inside said ion pump (1) and/or the temperature difference between the temperature present inside said ion pump (1) and the temperature outside said ion pump, and
- determining whether the pump is in the ON state or the OFF state based on said measurement of temperature and/or temperature difference.

12. Method of operating an ion pump (1) according to claim 11, said method comprising the steps of:
- equipping said ion pump (1) with a monitoring system that measures the temperature present inside said ion pump (1) and/or the temperature difference between the temperature present inside said ion pump (1) and the temperature outside said ion pump;
- in the absence of an electric potential difference between said at least one anode (3) and said at least one cathode (5), measuring, by means of said monitoring system, a first temperature inside said ion pump (1) and/or a first temperature difference between the temperature inside said ion pump and the temperature outside the ion pump (1);
- in the presence of an electric potential difference between said at least one anode (3) and said at least one cathode (5), measuring, by means of said monitoring system, a second temperature inside said ion pump (1) and/or a second temperature difference between said temperature inside said ion pump and the temperature outside the ion pump (1);
- monitoring the ON or OFF state of said ion pump according to the following criterion:
- if said second temperature measured inside said ion pump (1) is equal to said first temperature measured inside said ion pump (1) and/or if said first temperature difference is equal to said second temperature difference, the ion pump (1) is in the OFF state;
- if said second temperature measured inside said ion pump (1) is higher than said first temperature measured inside said ion pump (1) or if said second temperature difference is higher than said first temperature difference, the ion pump (1) is in the ON state.

13. Method of operating an ion pump (1) according to claim 11 or 12, wherein said monitoring system comprises at least one temperature sensor (11) located inside said ion pump (1) and arranged to monitor said temperature present inside said ion pump.

14. Method of operating an ion pump (1) according to claim 11 or 12 or 13, further comprising the steps of:
- equipping said ion pump (1) with a restart system arranged to generate an electric discharge within said ion pump (1) when said ion pump (1) is in the OFF state;
- monitoring the ON/OFF state of said ion pump (1);
- if it is detected that the ion pump (1) is in the OFF state, activating said restart system to generate an electric discharge within said ion pump (1).

15. Method of operating an ion pump (1) according to claim 14, wherein said restart system comprises at least one electron emitter (13), arranged inside the ion pump (1) and capable of generating said electric discharge.
